# FASCICULE DE BREVET EUROPEEN

(11) **EP 0 585 178 B1**
(45) Date de publication et mention de la délivrance du brevet: **17.01.1996**
(21) Numéro de dépôt: 93402104.9
(22) Date de dépôt: 26.08.1993
(51) Int. Cl.: B60J 5/04

(54) **Panneau latéral de véhicule automobile**
Fahrzeugseitenwand
Side panel for motor vehicle

(30) Priorité: 28.08.1992 FR 9210375
(43) Date de publication de la demande: 02.03.1994
(73) Titulaire: SOLLAC, F-92800 Puteaux (FR)
(72) Inventeur: De Smet, Gabriel, F-95800 Enghein les Bains (FR)
(74) Mandataire: Moncheny, Michel

(56) Documents cités:
- EP-A- 0 057 270
- EP-A- 0 302 044
- DE-A- 2 045 875
- FR-A- 2 119 315
- FR-A- 2 161 044
- FR-A- 2 257 450
- FR-A- 2 418 111
- FR-A- 2 567 460
- GB-A- 1 347 157

## Description

La présente invention a pour objet un panneau latéral d'un véhicule automobile comportant au moins une portière montée sur un cadre de portière.

De manière habituelle, les véhicules automobiles comportent deux panneaux latéraux reliés entre eux par le soubassement du véhicule et le pavillon de toit.

Chaque panneau latéral comprend une ou deux portières et un cadre de portière, constitué de montants latéraux, deux dans le cas où le panneau ne comporte qu'une portière, trois dans le cas où le panneau en comporte deux, d'une partie du soubassement du véhicule et d'une partie du pavillon de toit.

Chaque portière est liée à deux montants latéraux par au moins deux charnières sur le premier et par une serrure sur le second.

La portière habituellement vient en contact d'affleurement plan contre le cadre, sans aucune insertion mécanique entre la portière et le cadre.

Lors de collisions entre deux véhicules automobiles, le choc latéral est après le choc frontal, plus répandu, celui qui cause les blessures les plus sérieuses pouvant même entraîner la mort des occupants du véhicule.

Dans le cas d'un choc latéral, le véhicule percuté subit l'effort dû au choc généralement au niveau des portières, dans une zone habituellement à faible résistance mécanique en compression dans la direction du choc.

Ceci provoque généralement de grandes déformations du panneau latéral du véhicule et une réduction importante du volume de l'habitacle.

En effet, les portières étant en simple contact d'affleurement plan avec le cadre de portière et liées audit cadre d'une part par les charnières, d'autre part par la serrure, les parties en contact glissent les unes sur les autres du fait de l'enfoncement du panneau de portière et dans ce cas, la portière n'absorbe qu'une très faible partie de l'énergie transmise lors du choc, du fait que la tôle mince de la portière travaille principalement en flexion.

Il est connu pour absorber plus d'énergie due au choc au niveau des portières de renforcer les Portières et de limiter l'enfoncement de celles-ci avec des barres de renfort, dites barres anti-intrusion. Dans ce cas, l'énergie due au choc est répartie linéairement sur les barres de renfort et est ainsi transmise dans les deux montants latéraux de la portière aux points d'appui desdites barres sur lesdits montants.

Dans ce cas, l'énergie due au choc est transformée en effort de flexion sur les barres de renfort, qui après déformation de ces barres entraîne également une déformation par flexion des montants.

Or, une telle déformation des montants de portière est très préjudiciable aux occupants, ceux-ci étant généralement assis au droit de ces montants.

On connaît par ailleurs, notamment d'après le document FR-A-2418111 un panneau de fermeture pour carrosserie de véhicule automobile, du type comportant une paroi intérieure et une paroi extérieure, ainsi que des moyens d'emboîtement disposés le long des côtés du panneau et qui coopèrent avec des moyens complémentaires portés par une partie fixe de la carrosserie.

L'invention se propose de fournir un panneau latéral de véhicule automobile permettant d'absorber une grande quantité d'énergie lors d'un choc, sans entraîner de déformation importante de l'habitacle et sans induire sur les occupants une accélération due au choc, préjudiciable à leur vie, c'est-à-dire inférieure à environ 50g.

La présente invention a plus particulièrement pour objet un panneau latéral de véhicule automobile comprenant au moins deux montants et une partie du soubassement du véhicule pour former au moins un cadre de portière, au moins une portière montée sur ce cadre et comportant une partie inférieure pleine formée d'un panneau extérieur et d'un panneau intérieur sensiblement plan, ces panneaux délimitant entre eux un logement pour une vitre mobile, au moins un profilé étant soudé sur le pourtour dudit panneau intérieur, et au moins un profilé étant porté par le cadre et disposé à l'intérieur du profilé porté par le panneau intérieur, ces profilés constituant des moyens complémentaires réalisant un emboîtement de la portière sur le cadre lorsque la portière est en position fermée (Panneau du type selon FR-A-2 418 111), caractérisé en ce que le panneau intérieur est sensiblement plan y compris sur son pourtour sur lequel est soudé l'un desdits profilés, de telle sorte que ces moyens jouent un rôle de serre-flan pour le panneau intérieur, de sorte que lors d'un choc latéral, ce dernier subit une déformation en tension multiaxiale.

De préférence :
- le panneau intérieur de la partie pleine de la portière est plan ;
- le panneau intérieur de la partie pleine est convexe, la partie bombée étant dirigée vers l'intérieur du véhicule ;
- le panneau latéral comporte un renfort horizontal situé dans la partie supérieure de la partie pleine de la portière ;
- dans le cas des portières comportant un encadrement de vitre, les profilés disposés sur la portière et sur le cadre de portière s'étendent sur toute la périphérie de la portière et de la partie correspondante du cadre ;
- le panneau latéral comporte au moins un moyen d'absorption de choc disposé dans la partie pleine de la portière, entre le panneau extérieur et le panneau intérieur.

D'autres caractéristiques et avantages apparaîtront au cours de la description qui va suivre, donnée uniquement à titre d'exemple et faite en référence aux dessins annexés dans lesquels :
- la Fig. 1 est une vue partielle en élévation, schématique, de la face externe d'un panneau latéral selon l'invention ;
- la Fig. 2 est une vue, schématique, en élévation de la face interne d'une portière selon l'invention ;
- la Fig. 3 est une vue en coupe transversale d'un panneau latéral de véhicule automobile selon l'invention, la portière étant fermée ;
- la Fig. 4 est une vue schématique, en perspective d'une portière selon l'invention, certaines parties étant arrachées.

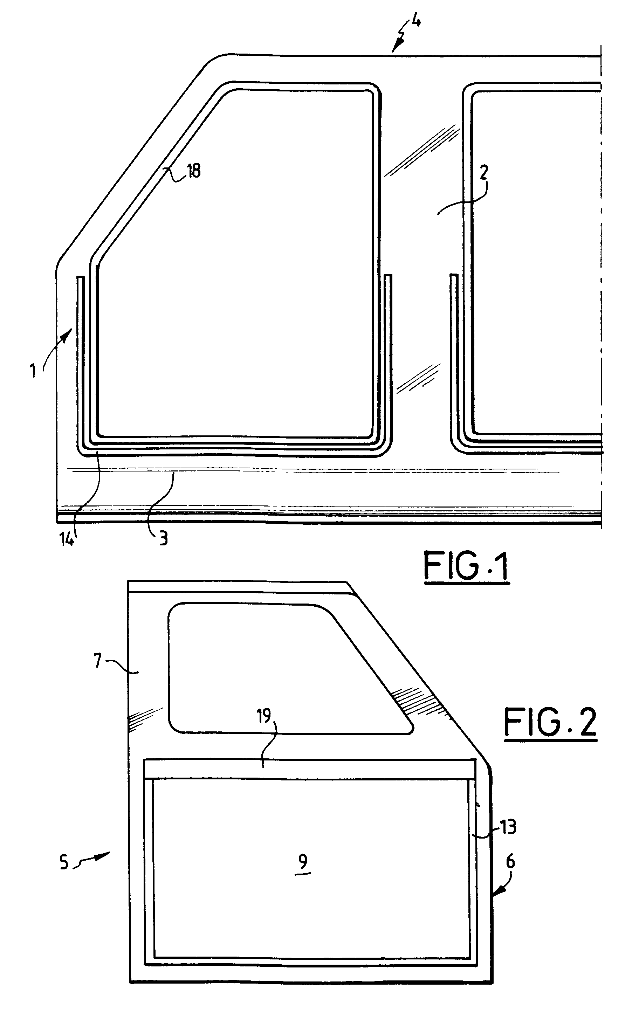

Le panneau latéral selon l'invention comprend au moins deux montants 1, 2 et une partie du soubassement 3 du véhicule pour former au moins un cadre 4 de portière (voir Fig. 1).

Il comprend également au moins une portière 5 montée sur le cadre et comprenant une partie inférieure pleine 6 et éventuellement un encadrement de vitre 7.

La partie inférieure 6 de la portière comporte un panneau extérieur 8 et un panneau intérieur 9 délimitant entre eux un logement 10 pour une vitre mobile 11.

La partie pleine 6 de la portière 5 et la partie correspondante du cadre de portière 4 situées en vis-à-vis, comportent des moyens complémentaires 12 réalisant un emboîtement de la portière sur le cadre lorsque la portière est fermée.

Les moyens 12 sont constitués d'une saillie 13 ménagée sur le pourtour de la partie pleine 6 de la portière 5, et d'une saillie 14 ménagée dans la partie du cadre situé en vis-à-vis. Ces saillies sont de préférence continues.

La portière 5 comporte un renfort horizontal 19 dans la partie supérieure de sa partie pleine 6.

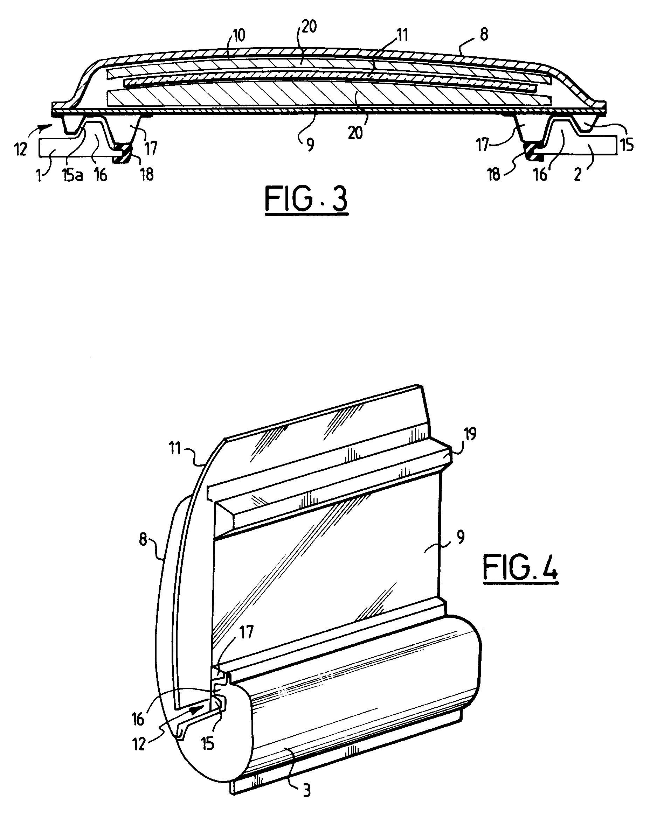

Dans l'exemple de réalisation représentée Fig. 3 et 4, le panneau intérieur 9 de la portière 5 est sensiblement plan et comporte un profilé 15 formant saillie vers le cadre de portière 4, par exemple soudé sur le pourtour du panneau 9.

Les montants 1 et 2 du cadre 4 de portière comportent une partie 16 en saillie vers la portière et venant en contact avec la face intérieure 15a du profilé 15 et la partie de soubassement 3 comporte une partie en saillie vers la portière et venant en contact avec la face intérieure du profilé du panneau intérieur 9 de portière. La partie en saillie 16 peut être venue de matière avec le cadre 4 ou être constitué par un profilé soudé sur le cadre.

Les profilés 15 et 16 peuvent avoir un profil en oméga, en U, ou L ou tout autre profil convenable.

Dans l'exemple de réalisation représenté, le panneau intérieur 9 de la portière comporte un second profilé 17 destiné à coopérer avec une garniture d'étanchéité 18 disposée sur le cadre de portière 4. Ce profilé 17 peut être d'un seul tenant avec le profilé 15.

Lorsque la portière comporte un encadrement de vitre 7, les moyens 12 peuvent s'étendre sur ledit encadrement et former ainsi une saillie 13 ménagée sur le pourtour de toute la portière et une saillie 14 ménagée sur tout le pourtour du cadre de portière 4.

Un renfort horizontal 19 est prévu sur le panneau intérieur 9 de la portière, au niveau de la jonction de ce panneau intérieur avec l'encadrement de la vitre, entre les deux parties montantes de la saillie 13.

Le renfort 19 peut être un profilé à section ouverte ou fermée, soudé sur le panneau intérieur 9 de la portière.

Le panneau latéral comporte au moins un moyen d'absorption du choc (20) disposé dans la partie pleine de la portière, entre le panneau extérieur (8) et le panneau intérieur (9).

Le moyen (20) peut être par exemple une plaque de mousse fixée ou collée à l'intérieur du panneau latéral.

Dans l'exemple représenté, le panneau latéral comporte deux plaques (20), une première entre le panneau extérieur (8) et la vitre, lorsque celle-ci est en position descendue et une seconde entre le panneau intérieur (9) et la vitre lorsque celle-ci est en position descendue.

Le panneau peut comporter une seule plaque 20 en contact sur l'une de ses faces avec le panneau extérieur 8 et sur l'autre de ses faces avec le panneau intérieur 9. Dans ce cas, la plaque 20 est munie d'une fente destinée à faire office de logement pour la vitre.

Ce moyen d'absorption de choc (20) a pour but de transmettre directement l'énergie du choc au panneau intérieur 9 du panneau latéral tout en la répartissant sur ledit panneau intérieur 9.

Une telle configuration permet, lorsque la portière est en position fermée sur le cadre de portière, de réaliser une liaison emboîtée de la portière sur le cadre.

Ainsi, lors d'un choc latéral, le panneau de portière n'est pas déformé en flexion mais subit une sorte d'emboutissage provoquant une déformation en tension multiaxiale dudit panneau de portière dans laquelle ce panneau est maintenu à sa périphérie en contact avec le cadre de portière au moyen des saillies 13 et 14.

La liaison emboîtée de la portière sur le cadre joue en quelque sorte un rôle de serre-flan pour le panneau intérieur sensiblement plan de la portière, qui se comporte alors comme une membrane d'absorption d'énergie travaillant, en cas de choc, en allongement et non pas en flexion comme c'est le cas des barres de renfort anti-intrusion.

De ce fait, l'acier constitutif du panneau de portière subit essentiellement des contraintes en traction et la déformation du panneau est due essentiellement à l'étirement du matériau, ce qui augmente sa résistance aux chocs.

Lors d'un essai normalisé de tenue aux chocs latéraux d'un véhicule automobile (norme MVSS 214), réalisé sur un véhicule comportant un panneau latéral selon l'invention, on a constaté pour un panneau intérieur réalisé dans une tôle d'acier d'épaisseur 0,65 mm, une contrainte maximale au centre du panneau de 400 MPa et une contrainte minimale au niveau des saillies de l'ordre de 15 MPa.

Après déformation du panneau de portière, la flèche maximale de la déformation est de 140 mm.

De plus, l'impact a généré une accélération inférieure à 30 g sur les occupants.

Un avantage supplémentaire lié au panneau latéral de véhicule selon l'invention est l'utilisation de portières très minces car il n'est pas nécessaire de rigidifier la portière en lui conférant une forme de caisson.

De nombreuses variantes de réalisation peuvent être envisagées sans sortir du cadre de cette invention ; c'est ainsi que la partie dite en saillie du cadre peut être réalisée sous la forme d'une gorge dans laquelle s'engage la partie en saillie de la portière.

## Revendications

1. Panneau latéral de véhicule automobile comprenant au moins deux montants (1, 2) et une partie (3) du soubassement du véhicule pour former au moins un cadre de portière (4), au moins une portière (5) montée sur ce cadre et comportant une partie inférieure pleine (6) formée d'un panneau extérieur (8) et d'un panneau intérieur (9) sensiblement plan, ces panneaux délimitant entre eux un logement (10) pour une vitre mobile (11), au moins un profilé (15) étant soudé sur le pourtour dudit panneau intérieur (9), et au moins un profilé (16) étant porté par le cadre (4) et disposé à l'intérieur du profilé (15) porté par le panneau intérieur (9), ces profilés constituant des moyens complémentaires réalisant un emboîtement de la portière sur le cadre lorsque la portière est en position fermée, caractérisé en ce que le panneau intérieur (9) est sensiblement plan y compris sur son pourtour sur lequel est soudé l'un (15) desdits profilés, de telle sorte que ces moyens jouent un rôle de serre-flan pour le panneau intérieur, de sorte que lors d'un choc latéral, ce dernier subit une déformation en tension multiaxiale.

2. Panneau latéral selon la revendication 1, caractérisé en ce que le panneau intérieur (9) de la partie pleine (6) de la portière est plan.

3. Panneau latéral selon la revendication 1, caractérisé en ce que le panneau intérieur (9) de la partie pleine (6) de la portière est légèrement convexe, la partie bombée étant dirigée vers l'intérieur du véhicule.

4. Panneau latéral selon l'une des revendications 1 à 3, caractérisé en ce qu'il comporte au moins un moyen (20) d'absorption de choc disposé dans la partie pleine de la portière, entre le panneau extérieur (8) et le panneau intérieur (9).

5. Panneau latéral selon la revendication 4, caractérisé en ce que le moyen (20) d'absorption de choc est une plaque réalisée en mousse.

6. Panneau latéral selon l'une des revendications 1 à 3, caractérisé en ce qu'il comporte un renfort horizontal (19) situé dans la partie supérieure de la portion pleine de la portière.

7. Panneau selon la revendication 6, caractérisé en ce que le renfort horizontal (19) est constitué d'un profilé soudé sur le bord supérieur du panneau intérieur de la portière.

8. Panneau latéral selon la revendication 1, caractérisé en ce que les profilés (13, 14) disposés sur le pourtour de la portion pleine de la portière d'une part, et la partie du cadre correspondante d'autre part, sont continus.

9. Panneau selon l'une des revendications 1 à 8, caractérisé en ce que la portière comprend un encadrement de vitre (7) et les profilés pour réaliser un emboîtement de la portière sur le cadre s'étendent dans l'encadrement de vitre de la portière et dans la partie du cadre correspondante.

10. Panneau selon l'une quelconque des revendications 1 à 9, caractérisé en ce que les profilés ont un profit en oméga.

11. Panneau selon l'une quelconque des revendications 1 à 10, caractérisé en ce que le panneau intérieur (9) porte un second profité (17) adapté pour coopérer avec une garniture d'étanchéité (18) disposée sur le cadre de portière (4).

12. Panneau selon la revendication 11, caractérisé en ce que le profilé (17) et le profilé (15), soudés sur le panneau intérieur sont d'un seul tenant.

## Claims

1. A side panel for a motor vehicle, comprising at least two vertical members (1, 2) and a part (3) of the base of the vehicle to form at least one door frame (4), at least one door (5) being mounted on this frame and comprising a solid lower part (6) formed by an outer panel (8) and a substantially flat inner panel (9), these panels delimiting a cavity (10) for a sliding window (11), at least one profiled member (15) being welded onto the periphery of the said inner panel (9) and at least one profiled member (16) being carried by the frame (4) and being arranged inside the profiled member (15) carried by the inner panel (9), these profiled members constituting complementary means for fitting the door on the frame when the door is closed,
characterised in that the inner panel (9) is substantially flat, including on its periphery, to which one (15) of the said profiled members is welded, with the result that these means act as a clamp for the inner panel in such a manner that, in the event of a side impact, the inner panel undergoes multi-axial stress deformation.

2. A side panel according to claim 1, characterised in that the inner panel (9) of the solid part (6) of the door is flat.

3. A side panel according to claim 1, characterised in that the inner panel (9) of the solid part (6) of the door is slightly convex, the convexity being oriented towards the interior of the vehicle.

4. A side panel according to one of claims 1 to 3, characterised in that it comprises at least one shock absorption means (20) provided in the solid part (6) of the door between the outer panel (8) and the inner panel (9).

5. A side panel according to claim 4, characterised in that the shock absorption means (20) is a foam slab.

6. A side panel according to one of claims 1 to 3, characterised in that it comprises a horizontal reinforcement (19) located in the upper portion of the solid part of the door.

7. A panel according to claim 6, characterised in that the horizontal reinforcement (19) is formed by a profiled member welded to the upper edge of the inner panel of the door.

8. A side panel according to claim 1, characterised in that profiled members (13, 14) provided on the periphery of the solid part of the door and the corresponding part of the frame respectively are continuous.

9. A panel according to one of claims 1 to 8, characterised in that the door comprises a window surround (7) and the profiled members, for fitting the door on the frame, extend in the window surround of the door and in the corresponding part of the frame.

10. A panel according to any one of claims 1 to 9, characterised in that the profiled members are omega-shaped in section.

11. A panel according to any one of claims 1 to 10, characterised in that the inner panel (9) carries a second profiled member (17) adapted to co-operate with a seal (18) provided on the door frame (4).

12. A panel according to claim 11, characterised in that the profiled member (17) and the profiled member (15), welded onto the inner panel, are formed in one piece.

## Patentansprüche

1. Fahrzeugseitenwand, mit wenigstens zwei Streben (1, 2) und einem Teil (3) des Grundträgers des Fahrzeuges, um wenigstens einen Fahrzeugtürrahmen (4) zu bilden, wenigstens einer Fahrzeugtür (5), die an diesem Rahmen angebracht ist und einen vollwandigen unteren Teil (6) aufweist, welcher aus einer Außenwand (8) und einer Innenwand (9), im wesentlichen eben, gebildet ist, wobei diese Wände zwischen sich eine Aufnahme (10) für eine bewegbare Scheibe (11) begrenzen, wenigstens einem Profilstahl (15), der auf den Umfang der Innenwand (9) geschweißt ist, und wenigstens einem Profilstahl (16), der von dem Rahmen (4) getragen wird und innerhalb des Profilstahls (15) angeordnet ist, welcher von der Innenwand (9) getragen ist, wobei diese Profilstähle komplementäre Mittel bilden, die eine Einlassung der Fahrzeugtür auf dem Rahmen bilden, wenn die Fahrzeugtür in geschlossener Position ist, dadurch gekennzeichnet, daß die Innenwand (9) im wesentlichen eben ist, einschließlich an ihrem Umfang, auf den einer (15) der Profilstähle geschweißt ist, derart, daß die Mittel als Halter für die Innenwand dienen, so daß, bei einem seitlichen Stoß, diese letztere eine multiaxiale Spannungsverformung erfährt.

2. Seitenwand nach Anspruch 1, dadurch gekennzeichnet, daß die Innenwand (9) des vollwandigen Teils (6) der Fahrzeugtür eben ist.

3. Seitenwand nach Anspruch 1, dadurch gekennzeichnet, daß die Innenwand (9) des vollwandingen Teils (6) der Fahrzeugtür leicht konvex ist, wobei der ausgebauchte Teil in das Innere des Fahrzeuges gerichtet ist.

4. Seitenwand nach einem der Ansprüche 1 bis 3, dadurch gekennzeichnet, daß sie wenigstens eine Einrichtung (20) zur Schockabsorption aufweist, die in dem vollwandigen Teil der Fahrzeugtür angeordnet ist, zwischen der Außenwand (8) und der Innenwand (9).

5. Seitenwand nach Anspruch 4, dadurch gekennzeichnet, daß die Einrichtung (20) zur Schockabsorption eine Platte ist, die aus Schaum hergestellt ist.

6. Seitenwand nach einem der Ansprüche 1 bis 3, dadurch gekennzeichnet, daß sie eine horizontale Verstärkung (19) aufweist, die in dem oberen Teil des vollwandigen Teiles der Fahrzeugtür angeordnet ist.

7. Wand nach Anspruch 6, dadurch gekennzeichnet, daß die horizontale Verstärkung (19) aus einem Profilstahl gebildet ist, der an die Oberkante der Innenwand der Fahrzeugtür geschweißt ist.

8. Seitenwand nach Anspruch 1, dadurch gekennzeichnet, daß die Profilstähle (13, 14), die an dem Umfang des vollwandigen Teiles der Fahrzeugtür einerseits und dem entsprechenden Teil des Rahmens andererseits angeordnet sind, kontinuierlich sind.

9. Wand nach einem der Ansprüche 1 bis 8, dadurch gekennzeichnet, daß die Fahrzeugtür eine Scheibenumrahmung (7) aufweist und die Profilstähle zum Bilden einer Einlassung der Fahrzeugtür auf dem Rahmen sich in die Scheibenumrahmung der Fahrzeugtür und in den entsprechenden Teil des Rahmens erstrecken.

10. Wand nach einem der Ansprüche 1 bis 9, dadurch gekennzeichnet, daß die Profilstähle ein Profil in Omega-Form haben.

11. Wand nach einem der Ansprüche 1 bis 10, dadurch gekennzeichnet, daß die Innenwand (9) einen zweiten Profilstahl (17) trägt, dazu ausgelegt, mit einer Dichtung (18) zusammenzuwirken, die auf dem Fahrzeugtürrahmen (4) angeordnet ist.

12. Wand nach Anspruch 11, dadurch gekennzeichnet, daß der Profilstahl (17) und der Profilstahl (15), die auf die Innenwand geschweißt sind, aus einem einzigen Stück sind.
